(19) Europäisches Patentamt
European Patent Office
Office européen des brevets

(11) **EP 1 827 048 A1**

(12) **EUROPEAN PATENT APPLICATION**
published in accordance with Art. 158(3) EPC

(43) Date of publication:
**29.08.2007 Bulletin 2007/35**

(51) Int Cl.:
*H04Q 7/38* (2006.01)   *H04L 12/28* (2006.01)
*H04Q 7/22* (2006.01)

(21) Application number: **06712621.9**

(22) Date of filing: **30.01.2006**

(86) International application number:
**PCT/JP2006/301478**

(87) International publication number:
**WO 2006/080506 (03.08.2006 Gazette 2006/31)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.01.2005 JP 2005024150**

(71) Applicant: **MATSUSHITA ELECTRIC INDUSTRIAL CO., LTD.**
**Osaka 571-8501 (JP)**

(72) Inventors:
• **NISHIO, Akihiko,**
  **Matsushita Electric Industrial Co.,Ltd.**
  **Osaka-shi,**
  **Osaka 540-6207 (JP)**

• **MATSUO, Hidenori,**
  **Matsushita Electric Industrial Co.,Ltd.**
  **Osaka-shi,**
  **Osaka 540-6207 (JP)**

(74) Representative: **Grünecker, Kinkeldey, Stockmair & Schwanhäusser**
**Anwaltssozietät**
**Maximilianstrasse 58**
**80538 München (DE)**

(54) **BASE STATION APPARATUS AND WIRELESS TRANSMISSION METHOD**

(57)   A base station apparatus capable of effectively distributing resources of a wireless communication system, enhancing the throughput and increasing the number of users accommodated in the communication system. This apparatus increases or reduces, in accordance with the traffic of the communication system, the repetition number of transport data addressed to a mobile station being under a soft handover. For example, when the resource usage rates of BS1, BS2 and BS3 are low, intermediate and high, respectively, the repetition number for MS1 being under a soft handover is set, in accordance with the resource usage rates, for example, to four for BS1, to two for BS2 and to one for BS3.

FIG.1

**Description**

Technical Field

The present invention relates to a base station apparatus and a radio transmitting method for carrying out repetition transmission.

Background Art

In recent years, not only speech but also various types of information, for example images and data, are transmission targets in mobile communications. Accordingly, there is a growing demand for highly reliable and high-speed transmission. However, when high-speed transmission is carried out in mobile communication, influences of delay waves due to multipath cannot be ignored, and transmission characteristics deteriorates due to frequency selective fading.

As one of counter frequency selective fading techniques, a multicarrier communication represented by an OFDM scheme is focused. Multicarrier communication refers to a technique of carrying out high-speed transmission by transmitting data using a plurality of subcarriers of which transmission speed are suppressed to an extent that frequency selective fading is not generated. Particularly, in the OFDM scheme, frequencies of a plurality of subcarriers are orthogonal to each other where data is arranged, so that it is possible to achieve highest frequency use efficiency among multicarrier communications and realize the OFDM scheme in a relatively simple hardware configuration. Therefore, the OFDM scheme is focused as a communication method used for a fourth-generation cellular scheme mobile communication, and is studied in various ways.

Further, in the OFDM scheme, as an additional measure for reception errors, there is a "repetition OFDM" or "symbol repetition OFDM" technique for transmitting the same data symbol copied (repeated) into a plurality of symbols (forexample, see Non-Patent Document 1). This repetition OFDM is focused as a scheme having higher frequency use efficiency than the OFDM scheme using simply frequency spreading.

On the other hand, in the cellular scheme, when a user near a cell boundary is further from a base station, received power becomes weaker and interferences from other-cells increase more, so that the reception environment is relatively not good. "Soft handover" (referred to as "SHO") is proposed as a technique for improvement. Soft handover refers to processing of transmitting the data to an user near a cell boundary from a plurality of base stations as soft handover targets (SHO base stations) by synchronizing the data with each other, and by this means, it is possible to improve the reception quality of an user near a cell boundary and improve throughput (for example, see Patent Document 1).

Patent Document 1: Japanese Patent Application Laid-Open No.HEI 11-178036

Non-Patent Document 1: "Performance Comparisons between OFCDM and OFDM in a Forward Link Broadband Channel" jointly written by Maeda, Atarashi, Kishiyama and Sawahashi, TECHNICAL REPORT OF IEICE RCS2002-162, August, 2002

Disclosure of Invention

Problems to be Solved by the Invention

However, in repetition OFDM, when soft handover is carried out, the data is transmitted to users from a plurality of base stations, and so there is a problem that the large amount of resources of a radio communication system are allocated to users and the number of users accommodated in a communication system decreases. For example, when transmission is carried out from three cells to a user located near a cell boundary, it naturally follows that one user uses three times as much resources (corresponding to three users) as usual.

It is an obj ect of the present invention to provide a base station apparatus and a radio transmitting method which make it possible to efficiently allocate resources of a radio communication system and increasing the number of users accommodated in a communication system.

Means for Solving the Problem

The base station apparatus of the present invention employs a configuration including: a transmitting section that repeats and transmits transmission data; a measuring section that measures a degree of congestion of a communication system; and a repetition factor setting section that sets a repetition factor for transmission data addressed to a mobile station in the middle of soft handover according to the degree of congestion.

Advantageous Effect of the Invention

According to the present invention, it is possible to efficiently allocate resources of a radio communication system and increase the number of users accommodated in a communication system.

Brief Description of Drawings

FIG.1 illustrates an overview of Embodiment 1;
FIG.2 is a sequence diagram showing exchange of signals between base station apparatuses and a mobile station according to Embodiment 1;
FIG.3 is a block diagram showing the main configuration of the base station apparatus according to Embodiment 1;
FIG.4 is a data table showing the relationship between resource use rates and the repetition factors;
FIG.5 is a sequence diagram showing exchange of signals between base station apparatuses and a mobile station according to Embodiment 2;
FIG.6 is a block diagram showing the main configuration of the base station apparatus according to Embodiment 2;
FIG.7 is a sequence diagram showing exchange of signals between base station apparatuses and a mobile station according to Embodiment 3;
FIG.8 shows an example of an MCS table used in determining an MCS;
FIG.9 is a block diagram showing the main configuration of the base station apparatus according to Embodiment 3;
FIG.10 is a sequence diagram showing exchange of signals between base station apparatuses and a mobile station according to Embodiment 4;
FIG. 11 is a data table showing relationships between received power differences and offsets; and
FIG.12 is a block diagram showing the main configuration of the base station apparatus according to Embodiment 4.

Best Mode for Carrying Out the Invention

Hereinafter, embodiments of the present invention will be described in detail with reference to the attached drawings.

(Embodiment 1)

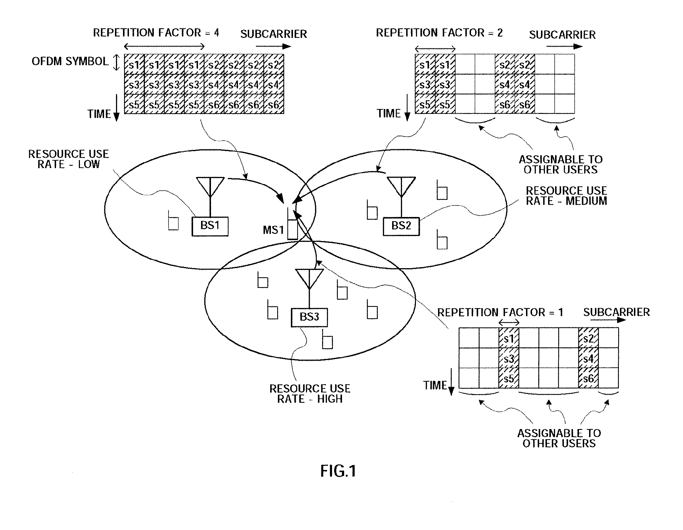

FIG. 1 shows an overview of Embodiment 1 of the present invention. Here, a case will be described here as an example where base stations in three cells (BS1, BS2 and BS3) transmit data to a mobile station (MS1) which is located near a cell boundary and is in the middle of soft handover. Furthermore, each base station carries out transmission based on a repetition OFDM scheme, and each transmission symbol is transmitted by performing transmission repeatedly.
In the present embodiment, for a mobile station which is located near a cell boundary and is in the middle of soft handover, each base station determines a repetition factor for data to be transmitted according to the degree of congestion of each cell including a resource use rate of each base station. In this way, it is possible to improve reception quality of the mobile station in the middle of soft handover and increase the number of users accommodated in a communication system.
For example, in FIG. 1, the resource use rate of BS1 is low, the resource use rate of BS2 is medium and the resource use rate of BS3 is high. Therefore, the repetition factor for MS1 in the middle of soft handover is set to 4 in BS1, 2 in BS2 and 1 in BS3 (that is, there is no repetition) according to each resource use rate. In FIG.1, s1 to s6 (data symbols in diagonally shaded areas) express data symbols for MS1.
In this description, the base station (base station which is in the middle of communication with the mobile station before soft handover) in the middle of communication with the mobile station in the middle of soft handover is especially referred to as "connected base station. " The base stations of soft handover targets other than the connected base station in adjacent cells are referred to as "SHO base stations." For example, in the 3GPP standard, "serving node B" (node B is synonymous with a base station) corresponds to the connected base station and "non-serving node B" within an "active set" (synonymous with a group of soft handover target base stations) corresponds to the SHO base station.

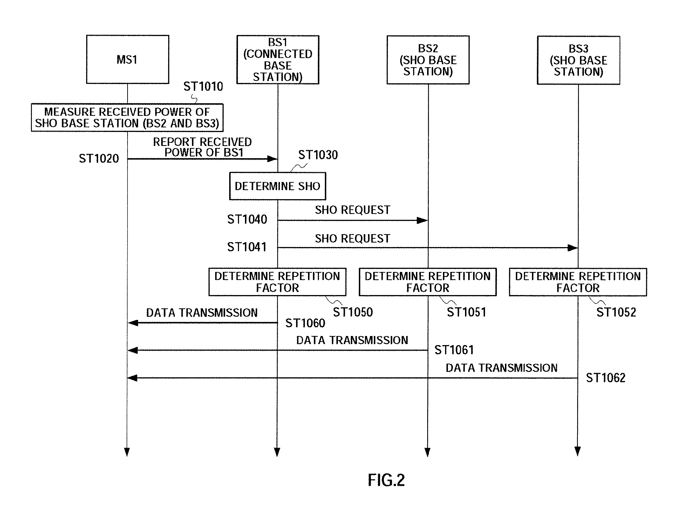

FIG.2 is a sequence diagram showing exchange of signals between base station apparatuses BS1 to BS3 and mobile station MS1 according to the present embodiment. Here, the base stations are connected to each other by cables and wireless transmission is carried out between the base stations and the mobile station.
Mobile station MS1 is in the middle of communication with BS1 in the beginning and periodically measures the received powers of SHO base stations (BS2 and BS3) (ST1010). The measured received powers are reported to connected base station BS1 (ST1020), and BS1 determines which base station should be the soft handover target based on the reported received power (hereinafter, referred to as "SHO decision") (ST1030). For example, it is determined that the base station providing received power larger than a predetermined threshold is the soft handover target base station, and that, when there is no base station which exceeds a threshold, soft handover is not carried out.

Next, BS1 reports a request for transmission for this mobile station to BS2 and to BS3 (referred to as "SHO request") (ST1040 and ST1041). This SHO request is made by reporting three data. To be more specific, these data refer to information (bit string) representing the SHO request, the ID of the mobile station for soft handover and the ID of the connected base station. The SHO request may also include other data.

BS1 determines a repetition factor for MS1 based on a resource use rate of BS1 (ST1050). BS2 and BS3 which receive the SHO requests also determine respectively repetition factors based on resource use rates of the respective base stations independently (ST1051 and ST1052). Each base station directly transmits data to MS1 using the determined repetition factor (ST1060 to ST1062). Here, the determined repetition is not reported to MS1 in advance.

Here, although a case has been described here as an example where base stations are directly connected to each other, it is alsopossible to employ a configuration where the base stations are connected together through a control station (RNC). Furthermore, the steps of ST1040 and ST1041 may not be carried out as shown in the figure. Moreover, the steps of ST1060 to ST1062 may not be carried out as shown in the figure.

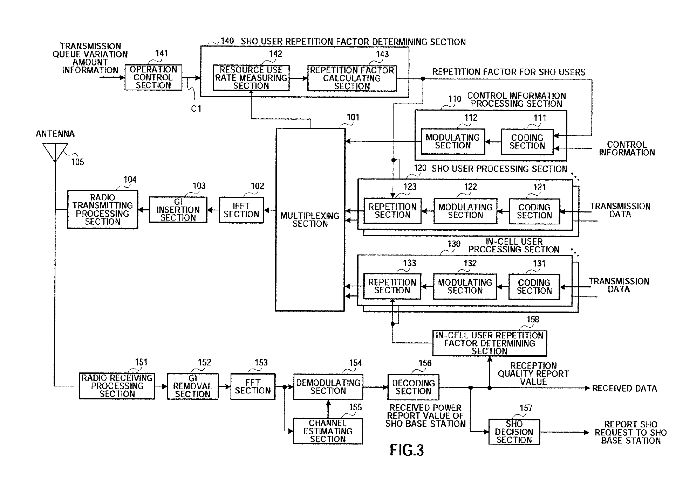

FIG.3 is a block diagram showing the main configuration of the base station apparatus according to the present embodiment.

First, the configuration in charge of transmission processing will be described. Transmission data is separated according to the data type and inputted to control information processing section 110, SHO user processing section 120 and in-cell user processing section 130. Although in-cell user processing section 130 is constituted of a plurality of circuits corresponding to the number of users accommodated, SHO user processing section 120 is constituted of a plurality of circuits, but does not correspond to the number of all users accommodated and circuits equivalent to the estimated number of mobile stations for soft handover.

Control information processing section 110 carries out transmission processing on control information. The input control information is subjected to encoding such as turbo coding in coding section 111, is modulated using QPSK in modulating section 112 and is outputted to multiplexing section 101. Repetition factor information for an SHO user, described later, is also subjected to transmission processing as control information.

SHO user processing section 120 carries out transmission processing on transmission data for the mobile station (SHO user) in the middle of soft handover. After coding section 121 and modulating section 122 carries out encoding processing and modulating processing respectively, repetition section 123 carries out repetition processing (symbol repetition processing) according to the separately input repetition factor information for an SHO user. The signal after repetition is outputted to multiplexing section 101.

In-cell user processing section 130 carries out transmission processing on transmission data for users not in the middle of soft handover in the cell. After coding section 131 and modulating section 132 carries out encoding processing and modulating processing respectively, repetition section 133 carries out repetition processing according to separately input repetition factor information for the users in the cell. The signal after repetition is outputted to multiplexing section 101.

Multiplexing section 101 multiplexes the control information signal from control information processing section 110, the transmission signal from SHO user processing section 120 and the transmission signal from in-cell user processing section 130 on OFDM subcarriers. These signals may be time-multiplexed or code-multiplexed instead of multiplexing on subcarriers. Multiplexing section 101 outputs the number of subcarriers for use, to resource use rate measuring section 142.

SHO user repetition factor determining section 140 has resource use rate measuring section 142 and repetition factor calculating section 143, receives as input operation instruction signal C1 from operation control section 141 and receives as input the number of subcarriers for use from multiplexing section 101.

Resource use rate measuring section 142 calculates a resource use rate, that is, the value resulting from dividing the number of subcarriers for use by the number of all subcarriers, and measures an average value of the resource use rate until the next operation instruction signal is inputted. Once the operation instruction signal is inputted, the average resource use rate is outputted to repetition factor calculating section 143.

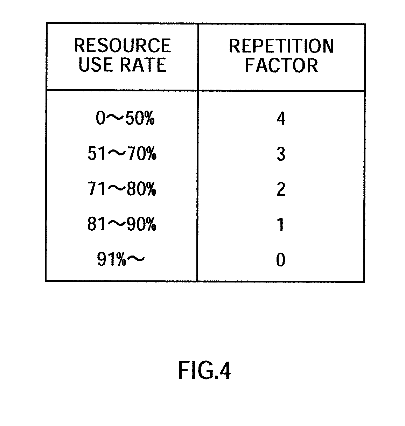

Upon reception as input of the operation instruction signal, based on the resource use rate outputted from resource use rate measuring section 142, repetition factor calculating section 143 calculates the SHO user repetition factor and outputs the result to coding section 111 in control information processing section 110 and repetition section 123 in SHO user processing section 120. When no operation instruction signal is inputted, repetition factor calculating section 143 outputs the previously calculated repetition factor. The repetition factor is calculated using, for example, the data table showing the relationship between resource use rates and the corresponding repetition factors as shown in FIG.4. In this case, for example, when the resource use rate is 75%, the repetition factor is 2.

To control SHO user repetition factor determining section 140, operation control section 141 calculates the operation cycle of SHO user repetition factor determining section 140 from inputted transmission queue variation amount information, and outputs operation instruction signal C1 according to the calculated operation cycle. Here, the transmission queue variation amount information represents the number of packets accumulated in the transmission queue or the amount of variation over time in the amount of data. Operation control section 141 sets a shorter operation cycle when the amount of variation of the transmission queue is greater, and sets a longer operation cycle when the amount of variation of the transmission queue is smaller. That is, operation control section 141 controls the change cycle of the repetition factor for MS1 according to the number of packets accumulated in the transmission queue or the degree of variation in the amount of data.

IFFT section 102 carries out inverse fast Fourier transform (IFFT) processing on the transmission signal outputted from multiplexing section 101 and generates an OFDM symbol. GI insertion section 103 inserts the GI (Guard Interval) in the transmission signal. Radio transmitting processing section 104 carries out radio processing such as D/A conversion and up-conversion on the transmission signal and transmits the transmission signal from antenna 105.

Next, the configuration in charge of receiving processing of the base station apparatus according to the present embodiment will be described.

Radio receiving processing section 151 carries out radio processing such as down-conversion and A/D conversion on the signal received at antenna 105 and obtains a baseband signal. GI removal section 152 removes the GI from the received signal per OFDM symbol. FFT section 153 carries out fast Fourier transform (FFT) per OFDM symbol. Channel estimating section 155 carries out channel estimation using pilot symbols. Demodulating section 154 uses the channel estimation value calculated at channel estimating section 155, carries out channel variation compensation on the received signal outputted from FFT section 153 and then carries out soft decision on the symbol modulated using, for example, QPSK. Decoding section 156 carries out decoding processing, for example turbo decoding, and obtains received data.

In-cell user repetition factor determining section 158 determines the repetition factor based on the reception quality report value reported from mobile station MS1. To determine the repetition factor, a table which is stored in advance and shows the relationship between reception quality and repetition factors is used.

SHO decision section 157 carries out an SHO decision so as to determine which base station BS2 or BS3 should be the soft handover target based on the reported receivedpower and reports an SHO request to the determined SHO base station.

In this way, according to the present embodiment, when the resource use rate is low (that is, when the degree of congestion of the communication system is low), a high repetition factor is used for the SHO user, so that it is possible to improve the reception quality of the SHO user. Therefore, it is possible to improve throughput of the SHO user and also improve BER (Bit Error Rate). Furthermore, when the resource use rate is high (that is, when the degree of congestion of the communication system is high), a small repetition factor is used for the SHO user, so that it is possible to hold resources corresponding to the small repetition factor and increase the number of users accommodated in a cell. In this way, it is possible to efficiently allocate resources of the radio communication system, increase throughput and also increase the number of users accommodated in a communication system.

Furthermore, in the above configuration, when the SHO user repetition factor is changed frequently, the control information is frequently transmitted and the transmission efficiency is reduced. On the contrary, when the repetition factor change cycle is set longer, it is likely that the resources cannot be efficiently allocated according to the change in traffic and throughput or the number of users accommodated decreases as a result.

Therefore, in the present embodiment, by controlling the operation cycle for determining the SHO user repetition factor from the amount of variation in the transmission queue, it is possible to set the minimum repetition factor change cycle. However, when the repetition factor for the SHO user is drastically changed, it is likely to drastically deteriorate the reception quality. So, the SHO user repetition factor may also be changed at stages.

Although a case has been described here with the present embodiment as an example where one cell is formed per base station, the present invention can be applied to, for example, a case where three sectors are formed per base station by sectorization of a cell. In such a case, "adjacent cells" according to the present embodiment may be read as "adjacent sectors".

Although a case has been described here with the present embodiment as an example where the change cycle of the SHO user repetition factor is controlled according to the transmission queue variation amount information, it is possible to calculate the SHO user repetition factor at a predetermined fixed cycle to inform to the inside of the cell at this predetermined cycle. In this case, operation control section 141 outputs operation instruction signal C1 to SHO user repetition factor determining section 140 per predetermined cycle.

The SHO user repetition factors may be changed only when the resource use rate is changed by a predetermined amount or more or the SHO user repetition factors may be changed only when the resource use rate is equal to or more than a threshold.

Furthermore, although a case has been described here with the present embodiment as an example where control of repetition factor is targeted at MS1, it is also possible to increase the number of targets and set the repetition factor for all mobile stations in the cell or set the different repetition per mobile station. As an example of the latter, to increase the repetition factor for the mobile station that is given higher priority, it is possible to carry out weighting on the repetition factor according to priority.

Furthermore, although a case has been described here with the present embodiment as an example where the resource use rate is used as the degree of congestion, but it is also possible to use, for example, the amount of traffic (to be more specific, the average amount of data accumulated, for example, in a transmission queue), the number of users in the cell or the number of users in the middle of communication.

Although a case has been described here with the present embodiment as an example where each base station directly transmits data to MS1 using a determined repetition factor and does not carry out reporting in advance, the SHO base stations (BS2 and BS3) may have a configuration of reporting a determined SHO user repetition factor to the connected base station (BS1) and reports the determined repetition factor to MS1 from BS1.

Furthermore, although a case has been described here with the present embodiment as an example where connected base station BS1 carries out an SHO decision, a control station of a higher rank may carry out an SHO decision.

Furthermore, although, in the present embodiment, the relationship between resource use rates and the repetition factors is represented using a data table, a function may also be used.

(Embodiment 2)

In Embodiment 2 of the present invention, by keeping the transmission rate of a mobile station located near a cell boundary at a required transmission rate or using minimum necessary resources, the number of users accommodated is increased. More specifically, the repetition factor at a connected base station (the base station to which the mobile station belongs) is determined using both the required repetition factor determined from the required transmission rate and SHO user repetition factor at SHO base stations (BS2 and BS3).

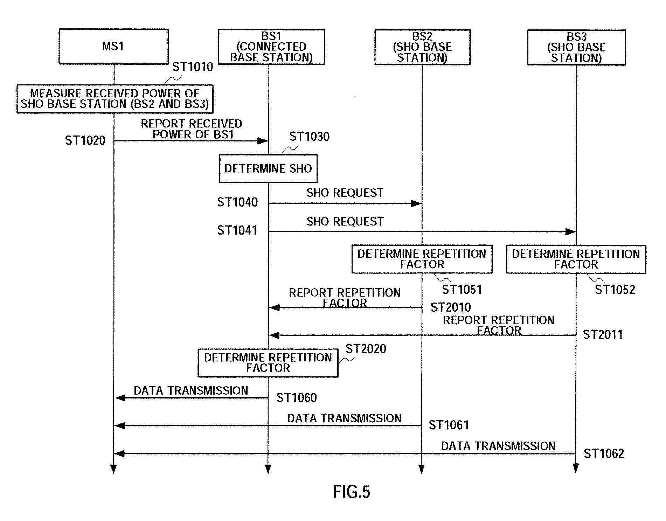

FIG.5 is a sequence diagram showing exchange of signals between base station apparatuses BS1 to BS3 and mobile station MS1 according to the present embodiment. In this sequence, the processing is carried out until SHO request processing (ST1041) shown in the sequence of Embodiment 1, the same steps are allotted the same step numbers and will not be described.

In ST1040 and ST1041, BS2 and BS3 receive SHO requests and respectively determine repetitions factors independently based on resource use rate of each base station (ST1051 and ST1052). BS2 and BS3 report the determined repetition factors to BS1 respectively (ST2010 and ST2011). Based on the reported repetition factors used by BS2 and BS3 and a required transmission rate for mobile station MS1, BS1 calculates a required repetition factor using a method described later and determines the repetition factor for MS1 using this required repetition factor (ST2020). Each base station transmits data to mobile station MS1 using each determined repetition factor as in the sequence of Embodiment 1 (ST1060 to ST1062).

Next, the calculating method of a repetition factor at connected base station BS1 will be described.

The repetition factor for BS1 is calculated by subtracting the sum total of repetition factors at the SHO base stations from the required repetition factor for MS1. For example, when the required repetition factor for MS1 is 8 and each repetition factor reported from both BS2 and BS3 is 2, the repetition factor for BS1 for MS1 becomes 4. However, the required repetition factor is calculated such that, when transmission is carried out from BS1 to MS1, the repetition factor achieves reception quality satisfying the required transmission rate.

Furthermore, although the above calculation is an ideal one, in actuality, the power of a received signal from each base station measured at mobile station MS1 is different from each other, and it is necessary to correct the repetition factor for each SHO base station according to the received power ratio between BS1 and the SHO base station at the mobile station. Therefore, the repetition factor for BS1 is calculated using following equation 1. However, the minimum repetition factor is 1.

[1]

$$N_{BS1} = \left\lceil N_{req} - (\alpha_2 \cdot N_{BS2} + \alpha_3 \cdot N_{BS3}) \right\rceil \quad \dots \text{(Equation 1)}$$

where, $\lceil x \rceil$ expresses rounding up all digits to the right of the decimal point of x.
Furthermore,

$N_{BSi}$: Repetition factor for BSi
$N_{req}$: Required repetition factor to satisfy required transmission rate
$\alpha_2 = P_{BS2}/P_{BS1}$, $\alpha_3 = P_{BS3}/P_{BS1}$

$P_{BS1}$: Received power from BS1 at MS
$P_{BS2}$: Received power from BS2 at MS
$P_{BS3}$: Received power from BS3 at MS

Furthermore, when there are $M_{BS}$ SHO base stations as soft handover targets, the repetition factor for BS1 is calculated using following equation 2.

[2]

$$N_{BS1} = \left\lceil N_{req} - \sum_{i=2}^{M_{BS}} \alpha_i \cdot N_{BSi} \right\rceil \quad \cdots \quad (Equation\ 2)$$

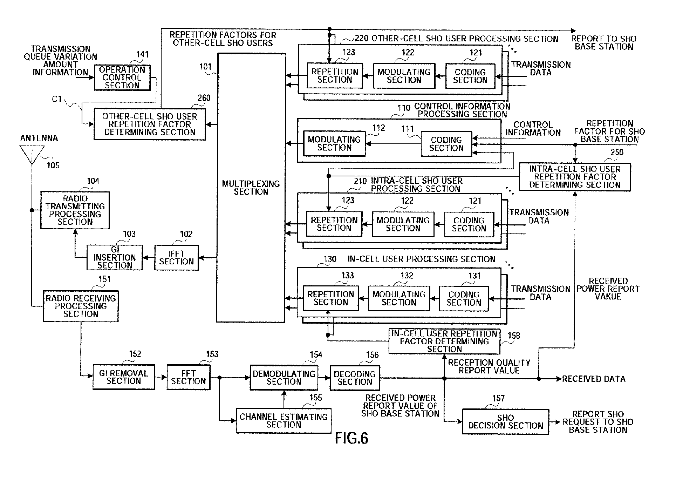

FIG.6 is a block diagram showing the main configuration of the base station apparatus according to the present embodiment. This base station apparatus has the same configuration as the base station apparatus shown in Embodiment 1 (see FIG.3) and the same components are allotted the same reference numerals and basically will not be described.

The transmission data is inputted separately according to the data type to control information processing section 110, intra-cell SHO user processing section 210, other-cell SHO user processing section 220 and in-cell user processing section 130. Intra-cell SHO user processing section 210 and other-cell SHO user processing section 220 each have circuits corresponding to the estimated number of users.

The operation of control information processing section 110 is basically the same as Embodiment 1. However, control information processing section 110 receives as input repetition factor information of each SHO base station and repetition factor information for intra-cell SHO users, and carried out encoding and modulating processing on these information together with other control information.

Intra-cell SHO user processing section 210 receives as input transmission data of SHO users who belong to the intra-cell (that is, SHO users accommodated by the base station as the connected base station), and carries out repetition processing on this transmission data according to repetition factor information for intra-cell SHO users which is separately inputted. The internal configuration of intra-cell SHO user processing section 210 is the same as SHO user processing section 120 shown in Embodiment 1 (see FIG.3).

Other-cell SHO user processing section 220 receives as input transmission data of SHO users who belong to other-cells, and carries out repetition processing on this transmission data according to repetition factor information for other-cell SHO users which is inputted separately. The internal configuration of other-cell SHO user processing section 220 is also the same as SHO user processing section 120 shown in Embodiment 1 (see FIG.3).

Intra-cell SHO user repetition factor determining section 250 receives as input a repetition factor and received power information of each SHO base station, and determines the repetition factor for the intra-cell SHO users based on the repetition factor and received power information of each SHO base station. The method using above equation 1 is used as the determining method. The internal configuration is the same as the SHO user repetition factor determining section 140 shown in Embodiment 1 (see FIG.3).

Other-cell SHO user repetition factor determining section 260 determines a repetition factor for an SHO user who belongs to the other-cell. The internal configuration is the same as SHO user repetition factor determining section 140 shown in Embodiment 1 (see FIG.3). The determined repetition factor for other-cell SHO user is reported to the SHO base station.

In this way, according to the present embodiment, each SHO base station carries out transmission with a repetition factor corresponding to a resource use rate to the mobile station in the middle of soft handover and can decrease a repetition factor in a condition that the degree of congestion is high, so that it is possible to prevent decreasing the number of users accommodated due to soft handover processing.

Furthermore, the connected base station carries out transmission with a repetition factor necessary to satisfy a required transmission rate for the SHO user, so that it is possible to keep a transmission rate of the SHO user at a required transmission rate.

(Embodiment 3)

In Embodiment 3 of the present invention, under the circumstance of the best effort traffic, throughput of a mobile station located near a cell boundary is improved fully and the number of users accommodated is increased. To be more specific, a connected base station determines an MCS (combination of a coding rate and a modulation scheme) for a mobile station for soft handover based on a repetition factor for each base station (BS1, BS2 and BS3).

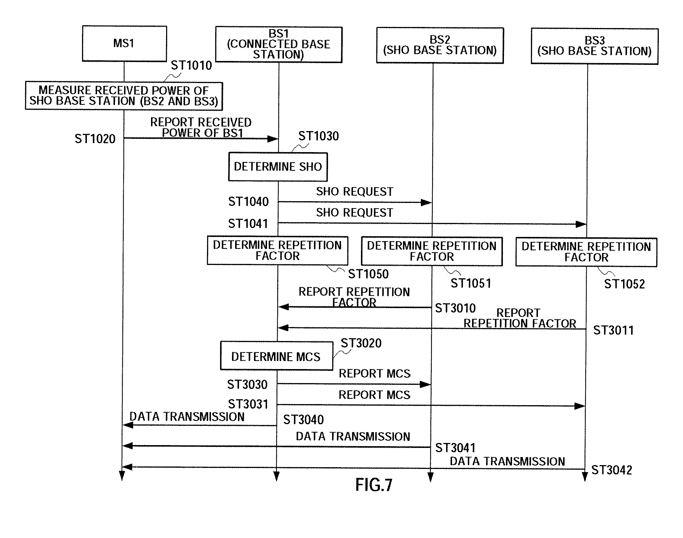

FIG.7 is a sequence diagram showing exchange of signals between base station apparatuses BS1 to BS3 and mobile station MS1 according to the present embodiment. This sequence shows the same processing up to repetition factor determining processing (ST1050 to ST1052) shown in the sequence of Embodiment 1, the same steps are assigned the same reference numerals and will not be described.

After the repetition factor is determined in ST1050 to ST1052, BS2 and BS3 report the determined repetition factors to BS1 (ST3010 and ST3011). BS1 determines the MCS based on the reported repetition factors of BS2 and BS3 and the repetition factors of the base station (BS1) (ST3020). ThisMCS determining method will be described later. BS1 reports the determined MCS to BS2 and BS3 (ST3030 and ST3031). Each base station transmits data to mobile station MS1 using the determined repetition factor and MCS (ST3040 to ST3042).

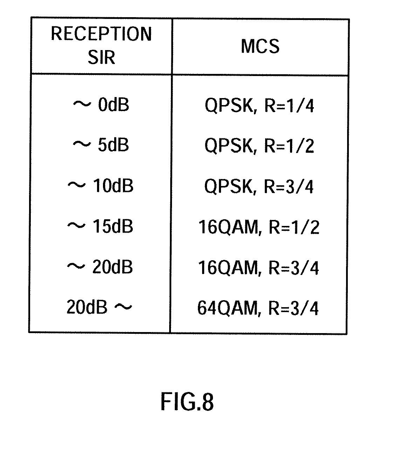

Next, the determining MCS method will be described. FIG. 8 shows an example of an MCS table used in determining the MCS.

This MCS table shows the relationship between reception SIRs and MCSs which maximizes throughput when corresponding to the corresponding reception SIR. Generally, for the value of a reception SIR, a required SIR to satisfy PER=0.01 is used when an MCS is used. In FIG.8, for example, when SIR=12 dB holds, it is possible to maximize throughput by using "16 QAM, R=1/2" as the MCS.

For the reception SIR, it is necessary to use the reception SIR (the SIR of data received from BS1, BS2 and BS3 in the middle of soft handover) at the mobile station in the middle of soft handover. This reception SIR cannot be measured before soft handover starts, and, in the present embodiment, the reception SIR is estimated by using the repetition factor at each base station and received power from each base station. That is, S (signal power) of the reception SIR equals to the amount of synthesizing signals transmitted from the respective base stations a number of times corresponding to repetition factors, and the reception SIR is estimated by following equation 3.

[3]

$$SIR_{SHO} = (P_{BS1} \cdot N_{BS1} + P_{BS2} \cdot N_{BS2} + P_{BS3} \cdot N_{BS3})/I \quad \ldots \text{(Equation 3)}$$

where,

$P_{BSj}$: Received power per symbol from BSj at MS1
$N_{BSi}$: Repetition factor at BSi
I: Interference power at MS1

Alternatively, the reception SIR can also be estimated using following equation 4 derived from above equation 3.
[4]

$$SIR_{SHO} = (P_{BS1} \cdot N_{BS1} + P_{BS2} \cdot N_{BS2} + P_{BS3} \cdot N_{BS3})/I$$

$$= ((P_{BS1}/P_{BS1})N_{BS1} + (P_{BS2}/P_{BS1}) \cdot N_{BS2} + (P_{BS3}/P_{BS1}) \cdot N_{BS3}) \cdot P_{BS1}/I$$

$$= (\alpha_1 \cdot N_{BS1} + \alpha_2 \cdot N_{BS2} + \alpha_3 \cdot N_{BS3}) \cdot SIR_{BS1} \quad \cdots \text{(Equation 4)}$$

where,

$SIR_{BS1}$: Reception SIR of signal from BS1 at MS1
$\alpha_1=1$, $\alpha_2=P_{BS2}/P_{BS1}$, $\alpha_3=P_{BS3}/P_{BS1}$

Here, to use equation 3, mobile station MS1 needs to report interference power information in addition to received power information from each BS. Furthermore, to use equation 4, mobile station MS1 needs to report the SIR of the received signal from BS1 in addition to received power information from each BS. The reception SIR is also used for other uses, for example grasping of a wireless link condition and adaptive modulation. In the present embodiment, equation 4 is used and mobile station MS1 periodically reports to BS1 a reception SIR from BS1. BS1 determines the MCS according to the MCS table shown in FIG.8 using the reception SIR estimated using equation 4.

When there are $M_{BS}$ SHO base stations as soft handover targets, equation 4 is expressed as following equation 5.
[5]

$$SIR_{SHO} = (\sum_{i=2}^{M_{BS}} \alpha_i \cdot N_{BSi}) \cdot SIR_{BS1} \quad \dots \quad (Equation \ 5)$$

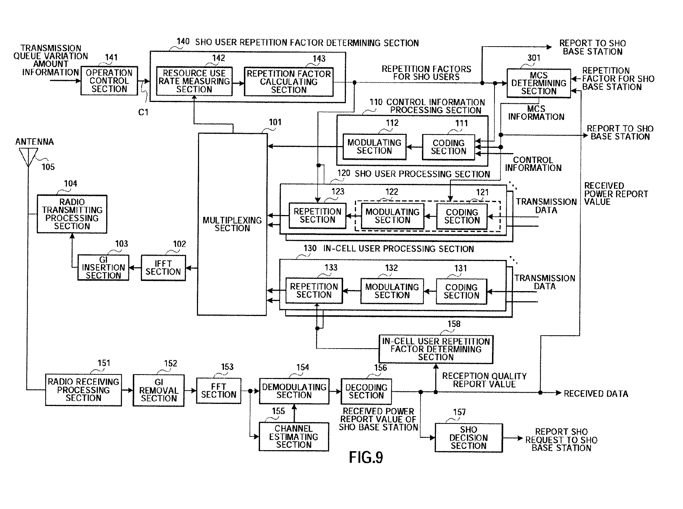

FIG.9 is a block diagram showing the main configuration of a base station apparatus according to the present embodiment. This base station apparatus has the same configuration as the base station apparatus shown in Embodiment 1 (see FIG.3), and the same components are assigned the same reference numerals and will be basically not described.

In the present embodiment, MCS determining section 301 is provided in addition to the configuration shown in Embodiment 1. MCS determining section 301 receives as input a repetition factor for SHO users determined at SHO user repetition factor determining section 140, a repetition factor for each SHO base station reported from each SHO base station and a received power report value reported from mobile station MS1, and determines an MCS using these values according to the above described MCS determining method.

The determined MCS information is inputted to control information processing section 110 and inputted to coding section 121 and modulating section 122 at SHO user processing section 120. Furthermore, the MCS information is reported to the SHO base stations.

In this way, according to the present embodiment, for a mobile station in the middle of soft handover, transmission is performed with a repetition factor according to a resource use rate of each base station, so that it is possible to lower the repetition factor in a condition of the high degree of congestion and thereby prevent the number of users accommodated from decreasing due to soft handover.

Furthermore, for a mobile station in the middle of soft handover, transmission is performed using an MCS that maximizes throughput taking in consideration the repetition factor for each base station, so that it is possible to improve throughput of the mobile station.

(Embodiment 4)

In Embodiment 4 of the present invention, repetition factors are increased more for a base station located nearer to a mobile station in the middle of soft handover (that is, the base station providing a greater advantage on reception quality of the mobile station in the middle of soft handover). On the other hand, the number of users accommodated is increased more for a base station providing a less advantage on reception quality. Thus, it is possible to improve throughput of the mobile station in the middle of soft handover and increase the number of users accommodated in the base station located far from the mobile station in the middle of soft handover. To be more specific, upon determination of the repetition factor for the mobile station in the middle of soft handover, the repetition factor is increased higher for a base station whose received power at a mobile station is stronger.

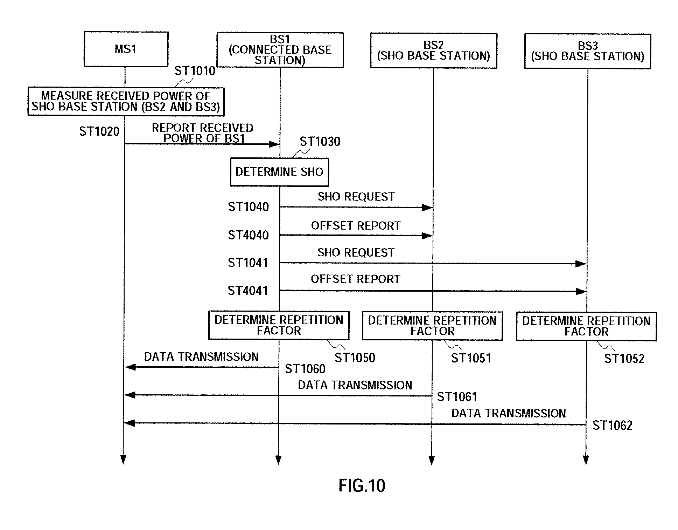

FIG.10 is a sequence diagram showing exchange of signals between base station apparatuses BS1 to BS3 and mobile station MS1 according to the present embodiment. This sequence is basically the same as the sequence shown in Embodiment 1, the same steps are assigned the same reference numerals and will not be described.

This sequence differs from Embodiment 1 (see FIG.2) in adding ST4040 after ST1040 and adding ST4041 after ST1041. In ST4040 and ST4041, BS1 reports an SHO request and the resource use rate offset. Each base station adds the reported offset to the resource use rate, uses the resource rate with the offset taken into consideration and determines the repetition factor (ST1050 to ST1052).

Next, the calculating method of the offset and the determining method of a repetition factor according to the present embodiment will be described.

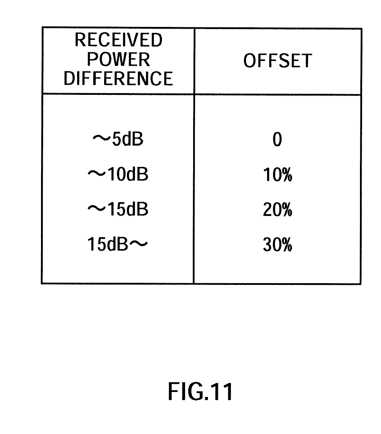

The offset at each base station is determined based on the received power difference (dB) from BS1. To be more specific, the offset is determined using a data table showing the relationship between received power differences and offsets as shown in FIG.11. Here, the greater the received power difference, the greater is the offset set. Upon determination of the repetition factor using the data table shown in Embodiment 1 (see FIG.4), each SHO base station uses the resource use rate that is added the reported offset as the resource use rate on the left column.

Here, although a case has been described here as an example where the offset is added to the resource use rate, the offset corresponding to the received power difference may also be added to the repetition factor.

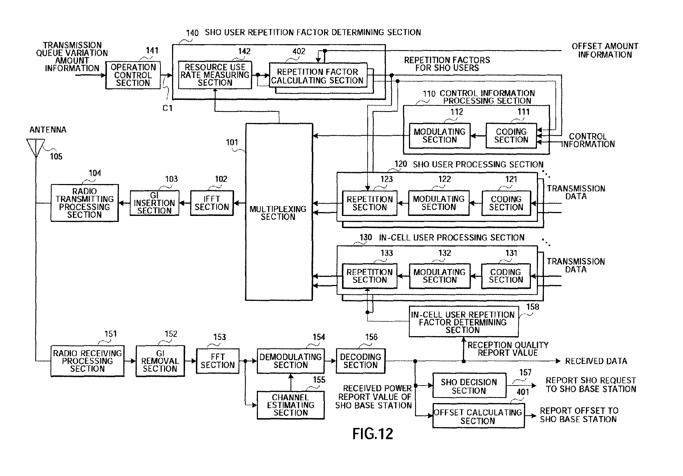

FIG.12 is a block diagram showing the main configuration of a base station apparatus according to the present embodiment. This base station apparatus has the same configuration as the base station apparatus shown in Embodiment 1 (see FIG.3), and the same components are assigned the same reference numerals and will not be basically described.

The configuration differs from Embodiment 1 in adding offset calculating section 401 and repetition factor calculating section 402 provided inside SHO user repetition factor determining section 140. Repetition factor calculating sections 402 are provided to correspond to the number of all users accommodated.

Repetition factor calculating section 402 receives as input offset amount information reported from an SHO base station, and operates circuits corresponding to users in the middle of soft handover out of circuits provided corresponding to all number of users accommodated.

Offset calculating section 401 receives as input received power information corresponding to each base station reported from mobile station MS1, and calculates the offset based on the difference between the received power from each SHO base station and the received power from the connected base station. The calculating method of the offset is as described above. This offset is reported to each SHO base station as offset amount information.

Repetition factor calculating section 402 receives as input a resource use rate and offset amount information reported from each SHO base station, uses a resource use rate that is added the offset and determines the repetition factor per SHO user. The determining method is as described above.

In this way, according to the present embodiment, a base station providing greater received power (that is, greater improvement in reception quality by performing transmission repeatedly) carries out transmission with a higher repetition factor for a mobile station in the middle of soft handover, so that it is possible to improve reception quality of the mobile station in the middle of soft handover. Further, it is possible to increase the number of users accommodated in a base station providing less improvement in reception quality resulting from repetition.

The embodiments of the present invention have been described.

The base station apparatus and the radio transmitting method according to the present invention are not limited to the above embodiments and can be implemented and modified in various ways. For example, although a case of has been described here with the above embodiments where repetition processing simply repeats transmission symbols, transmission may be carried out by changing the phase and power of repeated transmission symbols. Furthermore, the above embodiments may be combined appropriately and implemented.

Furthermore, although a case has been described here as an example where OFDM is used as the transmission scheme for the uplink and the downlink, the present invention can also be applied to other transmission schemes including CDMA and TDMA. Furthermore, different transmission schemes may also be used for the uplink and the downlink.

Here, a case has been described as an example where the present invention is configured by hardware. However, the present invention can also be realized by software. For example, it is possible to implement the same functions as in the base station apparatus of the present invention by describing algorithms of the radio transmitting methods according to the present invention using the programming language, and executing this program with an information processing section by storing in memory.

Furthermore, in the above embodiments, Also, the base station, mobile station and subcarrier may be referred to as Node B, UE and tone.

Each function block employed in the description of each of the aforementioned embodiments may typically be implemented as an LSI constituted by an integrated circuit. These may be individual chips or partially or totally contained on a single chip.

"LSI" is adopted here but this may also be referred to as "IC", system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semi conductor technology or a derivative other technology, it is naturally also possible to carry out function block integration using this technology. Application of biotechnology is also possible.

The present application is based on Japanese Patent Application No.2005-024150, filed on January 31, 2005, the entire content of which is expressly incorporated by reference herein.

Industrial Applicability

The radio transmitting method according to the present invention is suitable for use in a base station apparatus or the like in a mobile communication system.

**Claims**

1. A base station apparatus comprising:

a transmitting section that repeats and transmits transmission data;
a measuring section that measures a degree of congestion of a communication system; and
a repetition factor setting section that sets a repetition factor for transmission data addressed to a mobile station in the middle of soft handover according to the degree of congestion.

2. The base station apparatus according to claim 1, wherein the repetition factor setting section does not increase or decrease the repetition factor when an amount of change of the degree of congestion is smaller than a predetermined level, and increases or decreases the repetition factor when the amount of change of the degree of congestion is equal to or greater than the predetermined level.

3. The base station apparatus according to claim 1, wherein the measuring section uses a resource use rate in a cell, an amount of traffic in the cell, the number of users in the cell, or the number of users in the middle of communication as the degree of congestion.

4. The base station apparatus according to claim 1, wherein the repetition factor setting section sets a smaller repetition factor corresponding to the higher degree of congestion for the mobile station.

5. The base station apparatus according to claim 1, wherein the repetition factor setting section sets a higher repetition factor corresponding to the lower degree of congestion for the mobile station.

6. The base station apparatus according to claim 1, wherein, when said base station is communicating with the mobile station, the repetition factor setting section sets the repetition factor for said base station further taking into consideration the repetition factor used by a base station as a soft handover target of the mobile station.

7. The base station apparatus according to claim 1, wherein, when said base station is communicating with the mobile station, the repetition factor setting section corrects the repetition factor determined by said base station using a power ratio of a received signal from said base station measured at the mobile station to a received signal from the base station as the soft handover target of the mobile station measured at the mobile station.

8. The base station apparatus according to claim 1, further comprising a setting section that sets a modulation and coding scheme for the mobile station using the repetition factor for each base station.

9. The base station apparatus according to claim 1, further comprising a setting section that sets a modulation and coding scheme for the mobile station using a power ratio of a received signal from said base station measured at the mobile station to a received signal from the base station as the soft handover target of the mobile station measured at the mobile station.

10. The base station apparatus according to claim 1, further comprising a determining section that determines contribution of each base station to improvement on reception quality at the mobile station,
wherein, when the contribution of said base station is a maximum, the repetition factor setting section sets a higher repetition factors of the said base station for the mobile station than other base stations.

11. The base station apparatus according to claim 10, wherein the determining section uses received power at the mobile station as the contribution.

12. The base station apparatus according to claim 10, wherein the determining section uses a distance between the mobile station and said base station as the contribution.

13. A radio transmitting method comprising steps of:

repeating and transmitting transmission data;
measuring a degree of congestion of a communication system; and
increasing or decreasing a repetition factor for transmission data for a mobile station in the middle of soft handover according to the degree of congestion.

**Amended claims under Art. 19.1 PCT**

1. (Deleted)

2. (Deleted)

3. (Deleted)

4. (Deleted)

5. (Deleted)

6. (Deleted)

7. (Deleted)

8. (Deleted)

9. (Deleted)

10. (Deleted)

11. (Deleted)

12. (Deleted)

13. (Deleted)

14. (Added) A base station apparatus comprising:

a transmission section that repeats and transmits transmission data; and
a repetition factor setting section that sets a repetition factor of transmission data for a mobile station receiving signals from a plurality of base stations.

15. (Added) The base station apparatus according to claim 14, further comprising a measuring section that measures a degree of congestion of a communication system,
wherein the repetition factor setting section sets the repetition factor according to the degree of congestion.

16. (Added) The base station apparatus according to claim 15, wherein the repetition factor setting section does not increase or decrease the repetition factor when an amount of change of the degree of congestion is smaller than a predetermined level, and increases or decreases the repetition factor when the amount of change of the degree of congestion is equal to or greater than the predetermined level.

17. (Added) The base station apparatus according to claim 15, wherein the measuring section uses a resource use rate in a cell, an amount of traffic in the cell, the number of users in the cell, or the number of users in the middle of communication, as the degree of congestion.

18. (Added) The base station apparatus according to claim 15, wherein the repetition factor setting section sets a smaller repetition factor corresponding to the higher degree of congestion for the mobile station.

19. (Added) The base station apparatus according to claim 15, wherein the repetition factor setting section sets a higher repetition factor corresponding to the lower degree of congestion for the mobile station.

20. (Added) The base station apparatus according to claim 14, wherein, when said base station is communicating with the mobile station, the repetition factor setting section sets the repetition factor of said base station further taking into consideration the repetition factor used by a base station as a soft handover target of the mobile station.

21. (Added) The base station apparatus according to claim 14, wherein, when said base station is communicating with the mobile station, the repetition factor setting section corrects the repetition factor determined by the said base station using a power ratio of a received signal from the said base station measured at the mobile station to a received signal from the base station as the soft handover target of the mobile station measured at the mobile station.

22. (Added) The base station apparatus according to claim 14, further comprising a setting section that sets a modulation and coding scheme for the mobile station using the repetition factor of each base station.

**23.** (Added) The base station apparatus according to claim 14, further comprising a setting section that sets the modulation and coding scheme for the mobile station using a power ratio of a received signal from said base station measured at the mobile station to a received signal from the base station as the soft handover target of the mobile station measured at the mobile station.

**24.** (Added) The base station apparatus according to claim 14, further comprising a determining section that determines contribution of each base station to improvement on reception quality at the mobile station,
wherein, when the contribution of said base station is a maximum, the repetition factor setting section sets a higher repetition factor of said base station for the mobile station than other base stations.

**25.** (Added) The base station apparatus according to claim 24, wherein the determining section uses received power at the mobile station as the contribution.

**26.** (Added) The base station apparatus according to claim 24, wherein the determining section uses a distance between the mobile station and said base station as the contribution.

**27.** (Added) A radio transmission method comprising steps of:

repeating and transmitting transmission data;
measuring the degree of congestion of a communication system; and
increasing or decreasing the repetition factor of transmission data for a mobile station in the middle of soft handover according to the degree of congestion.

FIG.1

FIG.2

TRANSMISSION
QUEUE VARIATION
AMOUNT
INFORMATION

141
OPERATION
CONTROL
SECTION

C1

140 SHO USER REPETITION FACTOR DETERMINING SECTION

142
RESOURCE USE
RATE MEASURING
SECTION

143
REPETITION FACTOR
CALCULATING
SECTION

REPETITION FACTOR FOR SHO USERS

110 CONTROL INFORMATION
PROCESSING SECTION

112
MODULATING
SECTION

111
CODING
SECTION

CONTROL
INFORMATION

101

ANTENNA

105

104
RADIO
TRANSMITTING
PROCESSING
SECTION

103
GI
INSERTION
SECTION

102
IFFT
SECTION

MULTIPLEXING
SECTION

120 SHO USER PROCESSING SECTION

123
REPETITION
SECTION

122
MODULATING
SECTION

121
CODING
SECTION

TRANSMISSION
DATA

130 IN-CELL USER
PROCESSING SECTION

133
REPETITION
SECTION

132
MODULATING
SECTION

131
CODING
SECTION

TRANSMISSION
DATA

158
IN-CELL USER REPETITION
FACTOR DETERMINING
SECTION

151
RADIO RECEIVING
PROCESSING
SECTION

152
GI
REMOVAL
SECTION

153
FFT
SECTION

154
DEMODULATING
SECTION

156
DECODING
SECTION

RECEPTION
QUALITY REPORT
VALUE

RECEIVED DATA

155
CHANNEL
ESTIMATING
SECTION

RECEIVED POWER
REPORT VALUE OF
SHO BASE STATION

157
SHO
DECISION
SECTION

REPORT SHO
REQUEST TO SHO
BASE STATION

FIG.3

| RESOURCE USE RATE | REPETITION FACTOR |
|---|---|
| 0～50% | 4 |
| 51～70% | 3 |
| 71～80% | 2 |
| 81～90% | 1 |
| 91%～ | 0 |

FIG.4

| MS1 | | BS1<br>(CONNECTED<br>BASE STATION) | BS2<br>(SHO BASE<br>STATION) | BS3<br>(SHO BASE<br>STATION) |

ST1010

MEASURE RECEIVED POWER OF
SHO BASE STATION (BS2 AND BS3)

REPORT RECEIVED
POWER OF BS1

ST1020

ST1030

DETERMINE SHO

ST1040    SHO REQUEST

ST1041    SHO REQUEST

DETERMINE REPETITION
FACTOR

DETERMINE REPETITION
FACTOR

ST1051

ST1052

REPORT REPETITION
FACTOR

ST2010

REPORT REPETITION
FACTOR

ST2011

DETERMINE REPETITION
FACTOR

ST2020

DATA TRANSMISSION

ST1060

DATA TRANSMISSION

ST1061

DATA TRANSMISSION

ST1062

FIG.5

FIG.6

FIG.7

| RECEPTION SIR | MCS |
|---|---|
| ～ 0dB | QPSK, R=1/4 |
| ～ 5dB | QPSK, R=1/2 |
| ～ 10dB | QPSK, R=3/4 |
| ～ 15dB | 16QAM, R=1/2 |
| ～ 20dB | 16QAM, R=3/4 |
| 20dB ～ | 64QAM, R=3/4 |

FIG.8

FIG.9

FIG.10

| RECEIVED POWER DIFFERENCE | OFFSET |
|---|---|
| ~5dB | 0 |
| ~10dB | 10% |
| ~15dB | 20% |
| 15dB~ | 30% |

FIG.11

EP 1 827 048 A1

140 SHO USER REPETITION FACTOR DETERMINING SECTION

FIG.12

25

<div align="center">

**INTERNATIONAL SEARCH REPORT**

</div>

| | International application No. |
|---|---|
| | PCT/JP2006/301478 |

| A. CLASSIFICATION OF SUBJECT MATTER |
|---|
| *H04Q7/38*(2006.01), *H04L12/28*(2006.01), *H04Q7/22*(2006.01) |

According to International Patent Classification (IPC) or to both national classification and IPC

| B. FIELDS SEARCHED |
|---|
| Minimum documentation searched (classification system followed by classification symbols) |
| H04Q7/38, H04L12/28, H04Q7/22 |

| Documentation searched other than minimum documentation to the extent that such documents are included in the fields searched |
|---|
| Jitsuyo Shinan Koho        1922-1996   Jitsuyo Shinan Toroku Koho    1996-2006 |
| Kokai Jitsuyo Shinan Koho  1971-2006   Toroku Jitsuyo Shinan Koho    1994-2006 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | Medina Luciano and Hideo KOBAYASHI, "Proposal of OFDM System with Data Repetition", IEEE Vehicular Technology Conference (VTC 2000-Fall), September 2000. | 1-13 |
| A | JP 2003-258717 A (Toshiba Corp.), 12 September, 2003 (12.09.03), Par. Nos. [0013] to [0014]; Fig. 6 & US 2003/0169760 A1 | 1-13 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 March, 2006 (03.03.06) | 14 March, 2006 (14.03.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

**Patent documents cited in the description**

- JP 11178036 A

- JP 2005024150 A

**Non-patent literature cited in the description**

- **MAEDA ; ATARASHI ; KISHIYAMA ; SAWA-HASHI.** Performance Comparisons between OFCDM and OFDM in a Forward Link Broadband Channel. *TECHNICAL REPORT OF IEICE RCS2002-162,* August 2002